# EUROPEAN PATENT SPECIFICATION

(11) **EP 0 864 255 B1**
(45) Date of publication and mention of the grant of the patent: **04.06.2003**
(21) Application number: 98301791.4
(22) Date of filing: 11.03.1998
(51) Int. Cl.: A23D 7/015, A23D 7/00, A23L 1/48

(54) **Water-continuous spread**
Brotaufstrich mit kontinuierlicher Wasserphase
Produit à tartiner à phase aqueuse continue

(30) Priority: 12.03.1997 GB 9705091
(43) Date of publication of application: 16.09.1998
(73) Proprietor: St. Ivel Limited, London W12 7RP (GB)
(72) Inventor: Gupta, Bharat Bhushan, Bath, Avon BA1 4NG (GB); Kasapis, Stefan, Putnoe, Bedford MK41 8EW (GB); Alevisopoulos, Stefan, 15343 Agia Paraskevi, Athens (GR)
(74) Representative: Daniels, Jeffrey Nicholas

(56) References cited:
- EP-A- 0 596 546
- EP-A- 0 656 176
- EP-A- 0 672 350

## Description

The present invention relates to water-continuous spreads suitable for spreading on bread in place of butter, margarine or low fat spreads, which contain hydrocolloids as a structuring agent, which have a very low or zero fat content, and which have specified rheological properties.

### Background to the Invention

Very low fat spreads of less than 10% fat by weight have appeared on the market in the United Kingdom. These have usually contained a small amount of a fructo-oligosaccharide, inulin, as a source of dietary fibre, the amounts being too small to provide much of a structuring effect. Inulin is preferred as a source of dietary fibre as it supports the growth of beneficial bacteria such as Bifidobacterium spp. in the gut.

It is also known to use inulin as a structuring agent in very low fat water-continuous spreads in the presence of other hydrocolloid structuring agents, though large amounts of inulin are necessary.

EP-A-0596546 arid WO-A-9409647 disclose spreads containing 10-50% by weight of an oligofructose, 0.05-30% by weight of a biopolymer other than oligofructose, and less than 20% by weight of a fat phase. The examples all contain 25-33% by weight of inulin.

EP-B-0605019 discloses spreads of more than 15% by weight of oligofructose and 0.1-7% by weight of fat, with the oligofructose having an average degree of polymerization of 6-100 and the most preferred level of oligofructose being 20-50% by weight. The examples all contain 33% by weight of inulin.

EP-B-0605020 discloses spreads of a similar composition to those of EP-B-0605019 but additionally containing 0.1-15% by weight of mono- or disaccharides, the preferred mono- or disaccharide being lactose. The examples also all contain 33% by weight of inulin.

EP-A-0605217 discloses spreads containing a gelling maltodextrin or starch treated to remove amorphous regions, inulin and/or a gum, and optionally a bulking agent. Preferred levels of components are 3.5-10% by weight of gelling maltodextrin or starch, 10-23% by weight of inulin, 0.1-2.0% by weight of a gum, 0-10% by weight of a bulking agent and 0-15% by weight of fat. One example contains 20% by weight of inulin, the other example containing no inulin.

EP-A-0648425 discloses spreads with a similar composition to those of EP-A-0605217, but with a waxy maize starch in addition to or in place of the gelling maltodextrin or starch.

EP-A-0672350 discloses spreads comprising 0-20% by weight of a fat phase and a continuous aqueous phase comprising a gelling maltodextrin and an aggregate-forming proteinaceous gelling agent, and which have a plastic stress (σₚ) to maximum stress ratio (σₚ/σₘₐₓ) of 0.95-1.0; the spreads may also contain 1-7% by weight of a soluble vegetable fibre.

WO-A-9409648 discloses spreads containing at least 18% by weight of fibre ingredients, most preferably inulin, and which show a stress-strain relationship with a maximum stress (σₘₐₓ) of 0.01-100 kPa at a strain (εₘₐₓ) of 0.001-0.3, and a plastic stress (σₚ) ) to maximum stress ratio (σₚ/σₘₐₓ) of 0.1-0.95.

GB-B-2254536 discloses spreads comprising 2-20% by weight of starch and a water-binding system consisting of 0.05-1.5% by weight of alginate and 0.1-5% by weight of gelatin, together with a sufficient amount of a divalent metal ion source to stabilize the water-binding system. The spread may contain 0-40% by weight of fat and 1-15% by weight of vegetable fibre.

GB-A-2280196 discloses spreads comprising 5-60% by weight of a fat phase and an aqueous phase containing 0.1-30% by weight of vegetable fibre and a thickening agent, preferably 0.01-4% by weight of alginate; however the fat phase of these spreads must be the continuous phase.

Oligofructoses with a high average degree of polymerization have been disclosed, e.g. in WO-A-9601849 and WO-A-9603888.

WO-A-9603888 discloses spreads of at least 7% by weight, preferably 9-25% by weight, of an oligofructose with a weight average degree of polymerization of at least 14, such that the GF₁₋₄ oligofructose molecules comprise 0-8% by weight of the total GF₁₋₆₀ oligofructose molecules, and the spread has a solid fat content of less than 10% by weight at 10°C. The spreads show a stress-strain relationship with a maximum stress (σₘₐₓ) of 0.3-60 kPa at a strain (εₘₐₓ) of 0.01-0.5 and a plastic stress (σₚ) to maximum stress ratio (σₚ/σₘₐₓ) of 0.2-0.95.

EP-A-0532775 also discloses foods containing fructose polymers with high to very high degrees of polymerization, obtained by fermentation of sugar or inulin with enzymes derived from moulds, though water-continuous very low fat spreads are not disclosed.

### Summary of the Invention

We have now found that it is possible to make water-continuous spreads with a very low or zero fat content that contain very low amounts of fructo-oligosaccharides, yet which have good taste and spreadability.

The present invention provides a water-continuous spread which comprises 88-100% by weight of a continuous aqueous phase and 0-12% by weight of a dispersed fat phase, and which has specific rheological properties as set out below.

The continuous aqueous phase comprises 1-20% by weight based on the spread of a fructo-oligosaccharide with an average degree of polymerization of 20-30, together with at least two other hydrocolloid components selected from pectins, starches, milk proteins, gelling maltodextrins and xanthan gum. The spread is substantially gelatin-free.

The present invention further provides a process for the preparation of the water-continuous spread, wherein the aqueous phase and the fat phase are prepared as separate phases, which phases are mixed to form an oil-in-water emulsion, and the emulsion is homogenized, pasteurized, partially cooled, packed, and stored at low temperature.

### Rheological Properties of Spreads

The rheological technique of compression analysis (see for example Dairy Rheology : A Concise Guide, Prentice JH, VCH Publishers, 1992) can be used to analyse the stress/strain characteristics of all types of structured foods. When a graph of stress vs. strain is plotted for products under compression analysis, characteristic curves are produced for hydrocolloid gels, plastic dispersions, and very viscous solutions.

For the purpose of the present application, we would define the characterising features of the stress/strain profile of plastic dispersions such as butter, margarines, low fat spreads or water-continuous spreads as follows :-
the maximum stress (σₘ), which is the point where the stress goes through a maximum value,
the maximum strain (εₘ), which is the strain at the maximum stress (σm),
the inflection point stress (σᵢ), which is the stress at the inflection point of the curve where the stress goes through a minimum value following a sharp decrease at a strain slightly larger than the maximum strain,
the plastic stress (σₚ), which is the stress at a horizontal or near-horizontal portion of the curve (plateau) at a strain slightly larger than the maximum strain,
the ratio of the inflection point stress to the maximum stress (σᵢ/σₘ), and
the ratio of the plastic stress to the maximum stress (σₚ/σₘ).

This terminology is not the same as that used in the prior art (or in our discussion of the prior art above where we quote details as given), but it follows that of Kasapis S, Alevisopoulos S, et al. (Gums and Stabilisers for the Food Industry 8, eds. Phillips GO, Williams PA and Wedlock DJ, IRL Press, 1996 pp 195-206). It will be used from this point onwards in this application.

Using these definitions, the inflection point stress is characteristic of dispersions with a gel-like character, which exhibit a sharp pattern of breaking without a horizontal or near horizontal region of plastic flow. The ratio of the inflection point stress to the maximum stress (σᵢ/σₘ) lies between 0.1 and 0.95. By contrast, the ratio of the plastic stress to the maximum stress lies between 0.95 and 1.0, and is accompanied by a change in the viscoelastic response of the dispersion and the creation of a plastic profile with a smooth shoulder followed by a shallow dip or a flat plateau. However the fact that there is still a decrease in the stress at a strain slightly greater than the maximum strain indicates that these dispersions still possess some gel-like texture.

According to EP-B-0298561, where these features of stress/strain profiles are discussed in relation to water-continuous spreads, the ratio of the inflection point stress ("plastic stress" in their terminology) to the maximum stress (σᵢ/σₘ) is preferably 0.2 to 0.95, more preferably 0.3 to 0.8. However, according to EP-A-0672350, the preferred ratio of plastic stress to maximum stress for water-continuous spreads is 0.95 to 1.0, which is characteristic of products with improved spreading properties.

We have now found that water-continuous spreads which have a shoulder on the stress/strain curve but which do not show a maximum stress, can also be suitable for spreading on bread in place of butter, margarine or low fat spreads. In fact they are superior to those which show a maximum stress on the stress/strain curve. Since it is impossible to calculate any ratio for these products, which have no maximum stress, we have defined a parameter C to delimit the range of products made according to our invention, which are suitable for spreading on bread in place of butter, margarine or low fat spreads.

### Rheological Properties of the Invention

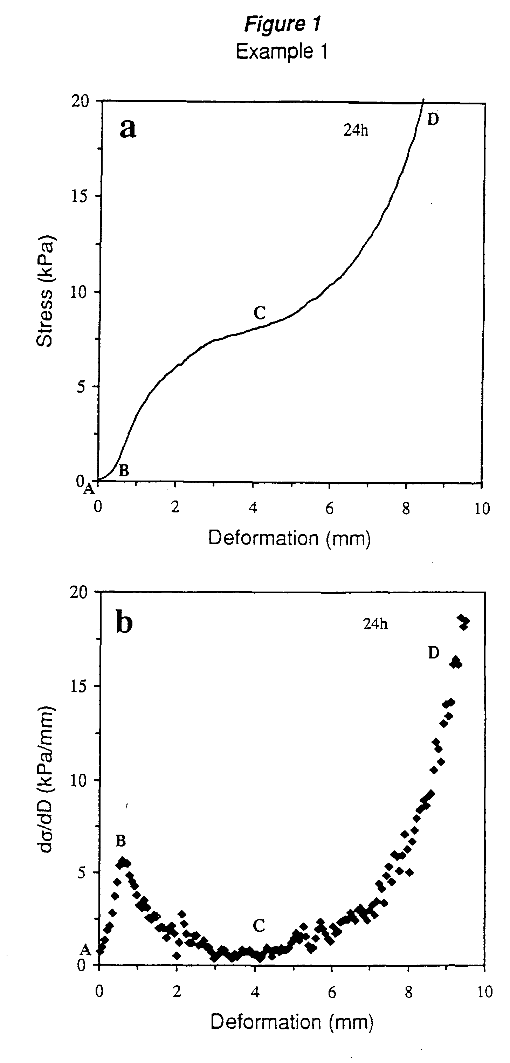

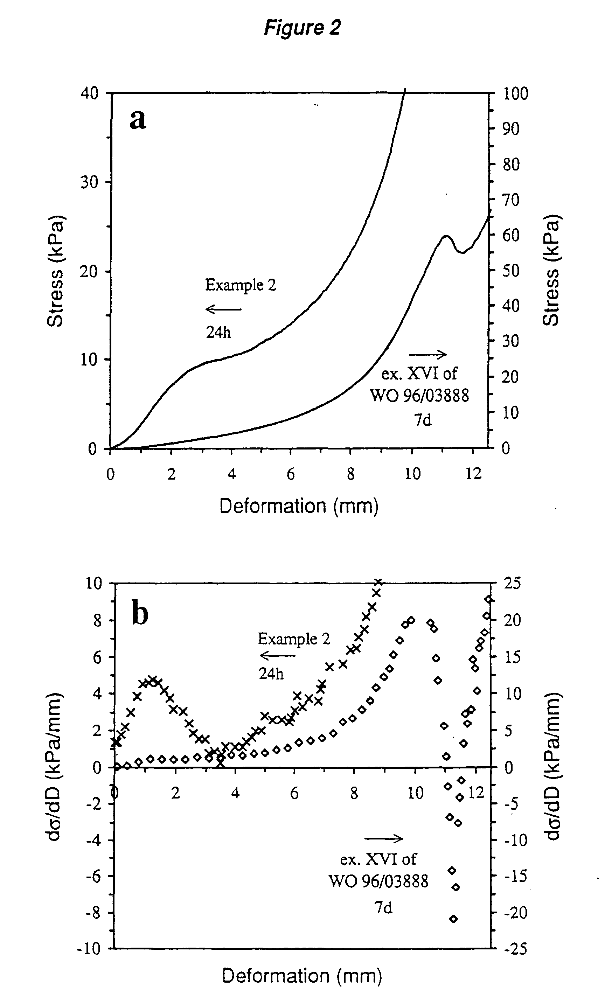

Spreads made according to the invention show characteristic compression curves similar to that given in Figure 1a (Example 1). There is no indication of a gel-like fracture with a negatively sloping curve beyond the yield point. The plot of the first derivative of the stress as a function of sample deformation vs. sample deformation for the same spread is shown in Figure 1b. This curve shows three distinct regions which are characteristic of the spreads of the invention :-
Part AB is the portion of the compression curve where the rate of increase in the stress is accelerating; in the first derivative plot it corresponds to the portion where dσ/dD increases rapidly to a peak.
Part BC is the portion of the compression curve where the rate of increase in the stress is decelerating and asymptotically approaching a plateau; in the first derivative plot it corresponds to the portion where dσ/dD falls to a minimum (point C).
Part CD is the portion of the compression curve where the rate of increase in the stress accelerates again, reflecting the level of flow as the moving plate closes on the stationary plate; in the first derivative plot it corresponds to the portion where dσ/dD increases again.

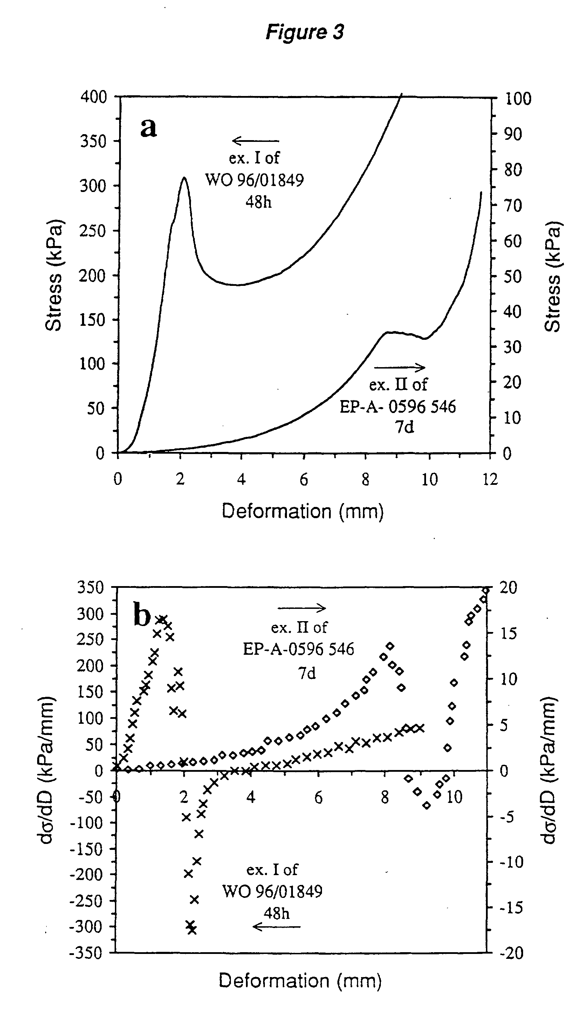

Point C is important because it enables a clear distinction to be drawn between spreads which show some gel-like texture and those which show purely plastic properties. A purely plastic spread produces a smooth compression curve with a shoulder in the middle part and with no apparent yield point that would create a curve with a negative slope. Curves of plastic spreads will therefore show values of dσ/dD ≥ 0 at point C. In contrast spreads showing any gel-like texture produce compression curves with an identifiable yield point (σₘ) and a negative slope after the yield point, resulting in values of dσ/dD at point C that are negative. The stress/strain profile and the first derivative plot of a spreadable product of the invention are also given in Figure 2 (Example 2), and it is contrasted with the gel-like texture of products of WO-A-9603888 (Comparative Example A) in Figure 2, and of products of WO-A-9601849 (Comparative Example B) and EP-A-0596546 (Comparative Example C) in Figure 3.

Spreads that contain gelatin will not show purely plastic properties, due to the strongly elastic character of the gelatin gel, and will thus have a negative value at point C.

When compression analysis is carried out on the spread according to the present invention at 5°C after storage at that temperature for at least 24 hours, using a cylindrical sample of 28 mm diameter and 14 mm height, which is compressed to 10% of its original height (90% compression) at a constant rate of 0.8 mm/sec, a plot of stress (σ) versus strain (ε) shows a single shoulder with no maximum stress. When the first derivative of the stress (σ) as a function of the sample deformation (D - measurable as the distance in mm travelled by the compression plate) is plotted against the sample deformation (i.e. dσ/dD vs. D), the plot shows a minimum with a value equal to or greater than zero. C is defined as the value of dσ/dD at the minimum. If the stress/strain curve has shown a maximum stress greater than the plastic stress, then C is negative and the spread does not have the advantageous properties according to the present invention.

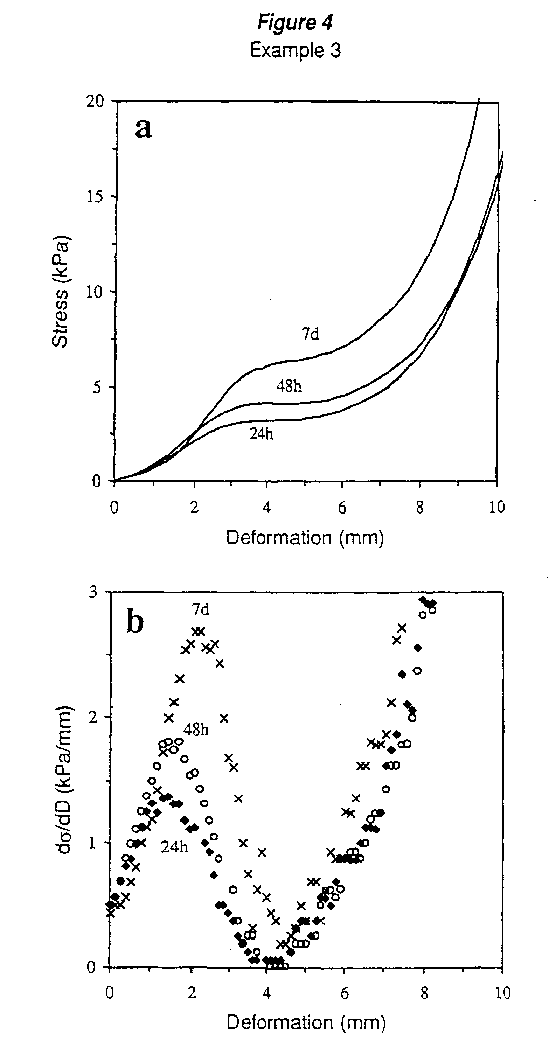

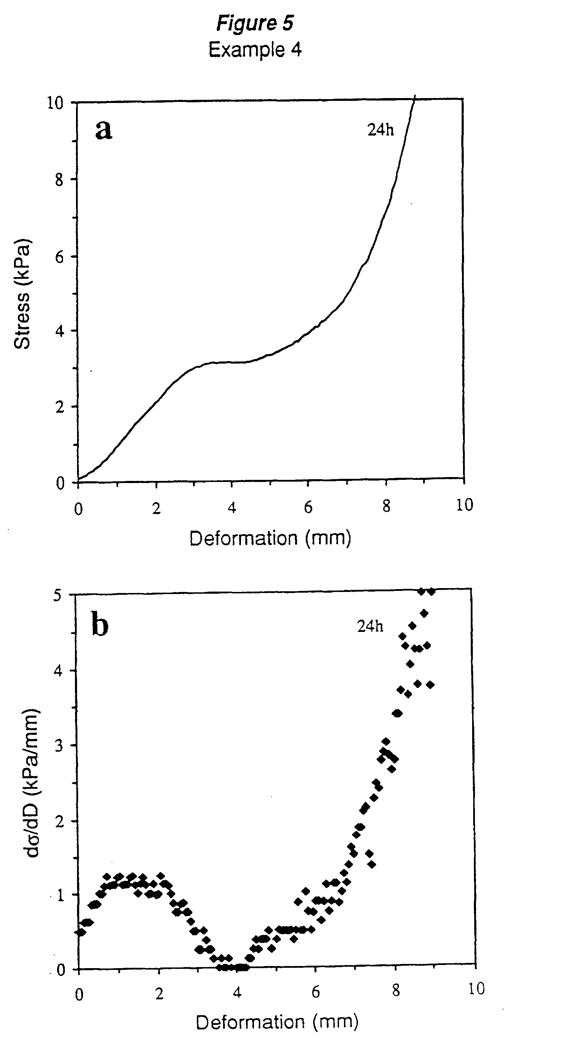

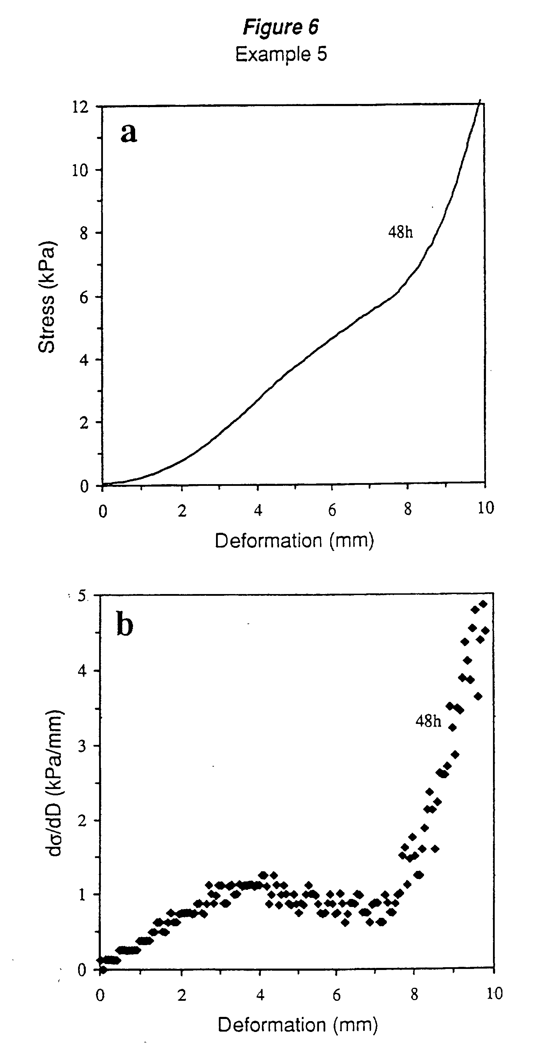

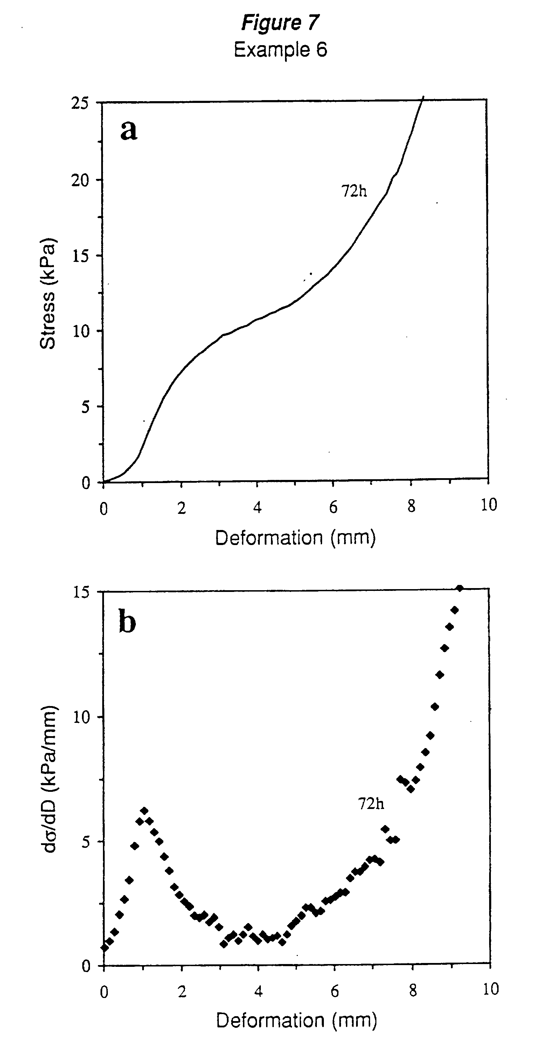

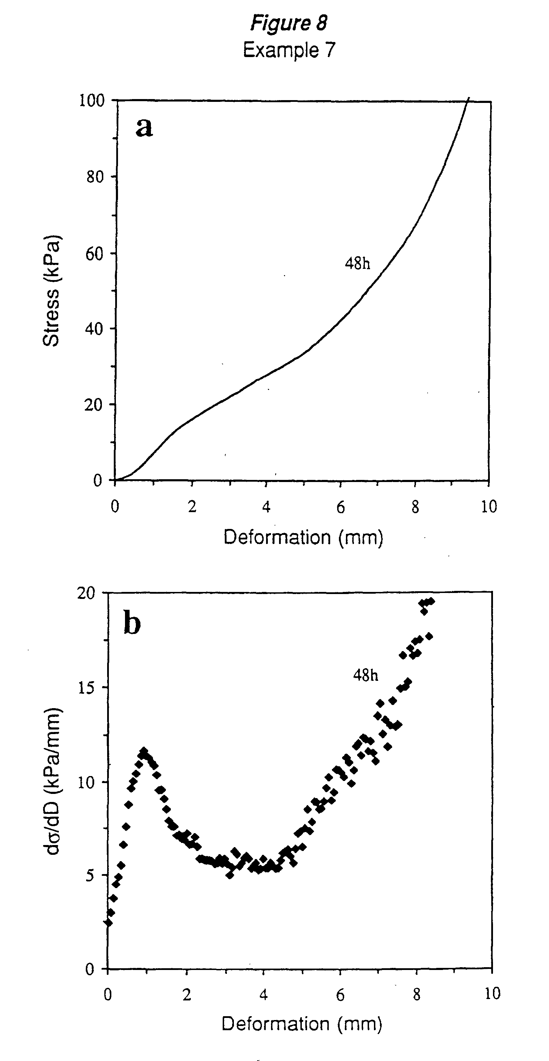

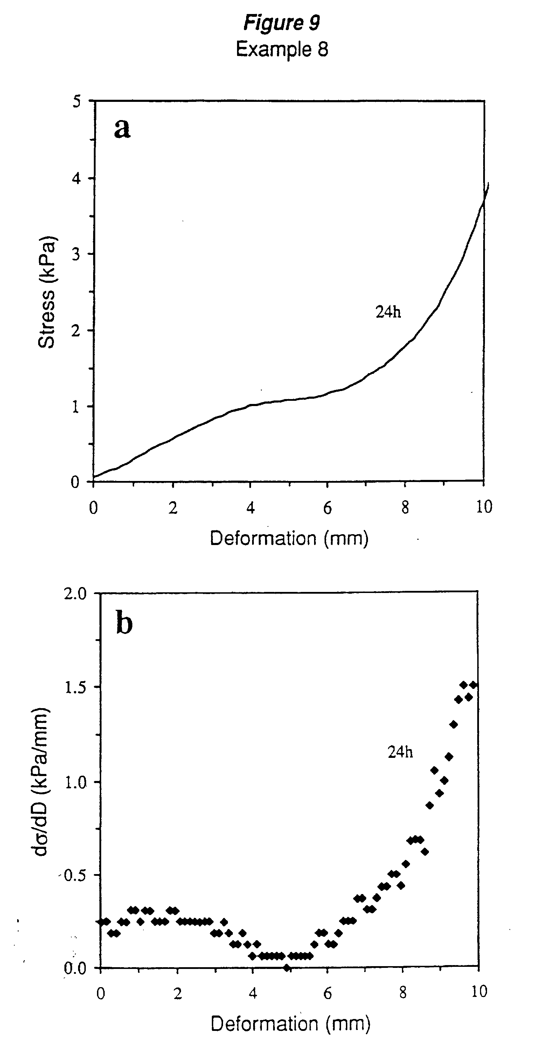

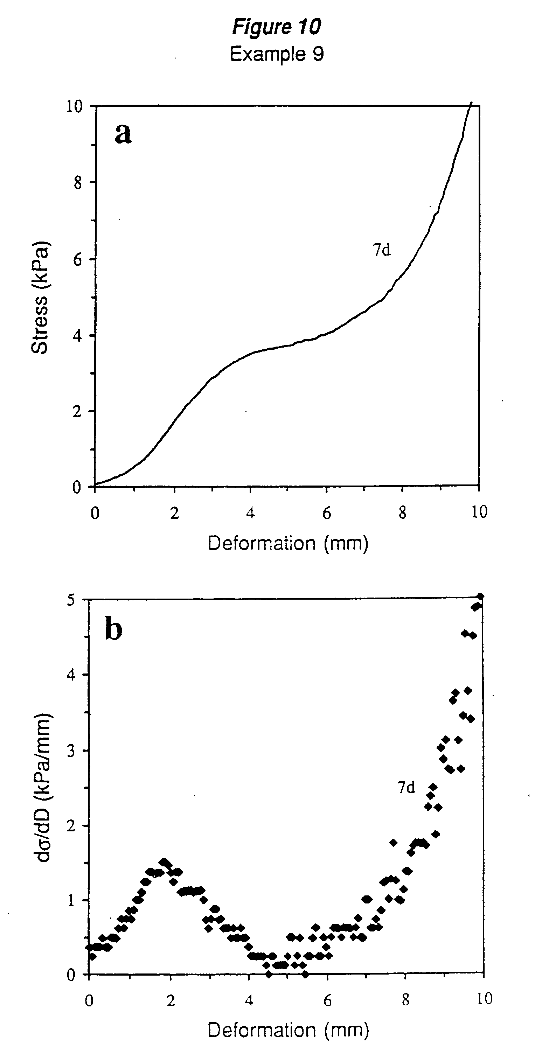

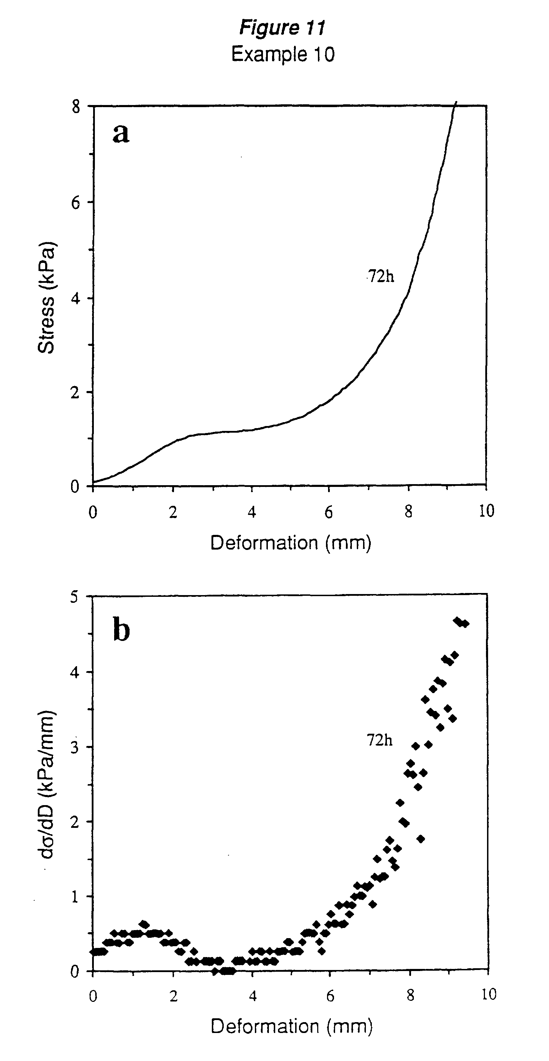

The development of structure in the spreads of the invention takes place over time as shown in Figure 4a (Example 3). This is reflected in a steadily increasing B value in the first derivative plot from about 1.4 to 1.8 to 2.7 kPa/mm at 1, 2 and 7 days respectively (Figure 4b). Clearly products become firmer with time but remain within the acceptable range for a spreadable product. Furthermore, the characteristic drop in the value of dσ/dD creates similar minima of 0.06, 0.01 and 0.16 kPa/mm at point C over this time span. This emphasizes the importance of point C since it demonstrates that the development of firmness with time in the products of the invention does not alter their good spreading characteristics.

When the spreads of the invention are subjected to compression analysis under the conditions specified above after storage at 5°C for any period between 24 hours and 7 days, the plot of the first derivative of the stress (σ) as a function of the sample deformation against the sample deformation shows a dip wherein the value of dσ/dD at point C is equal to or greater than zero. The spreads may have a C value up to 6.0 kPa/mm. Preferably the C value of is 0.0-1.0 kPa/mm, more preferably the C value of is 0.0-0.37 kPa/mm.

### Composition of the Spreads of the Invention

The spreads of the present invention are water-continuous dispersions comprising 88-100% by weight of a continuous aqueous phase and 0-12% by weight of a dispersed fat phase, wherein the continuous aqueous phase comprises 1-20% by weight based on the spread of a fructo-oligosaccharide with an average degree of polymerization of 20-30, together with at least two hydrocolloid components selected from pectins, starches, milk proteins, gelling maltodextrins and xanthan gum, the spreads being substantially gelatin-free.

Preferably the hydrocolloid components are selected from the following :-
0.3-4.0% by weight based on the spread of a pectin which is either 0.3-1.3% by weight of a low-methoxy pectin together with 50-100% of the stoichiometric equivalent of calcium ions, or 1.0-4.0% by weight of a dried cationic pectin salt, which when suspended in distilled water will swell to give heat-stable particles of a mean equivalent diameter greater than 100 µm,
1.0-8.0% by weight based on the spread of a starch,
1.5-7.5% by weight based on the spread of a milk protein,
8.0-14.0% by weight based on the spread of a gelling maltodextrin, and
0.05-0.2% by weight based on the spread of xanthan gum.

The fat used in the fat phase of the spread, if present, is selected from milk fat, vegetable oils, vegetable fats, animal fats, hydrogenated vegetable oils, hydrogenated fish oils or mixtures of any of the foregoing oils or fats. The fat or fats used may have been subjected to a suitable interesterification or fractionation treatment. If milk fat is used, it may be in the form of butter, butteroil, anhydrous milk fat, fractionated milk fat, cream, concentrated cream, or a mixture thereof. If vegetable oils or hydrogenated vegetable oils are used, they may be selected from any of the vegetable oils normally used in the manufacture of margarines and low fat spreads. Typical vegetable oils are rapeseed oil, palm oil, soya oil, sunflower oil, and mixtures thereof.

Preferably the amount of fat present in the spread is less than 10.5% by weight, more preferably in the range 2.5 to 7.5% by weight. In order to ensure the adequate dispersion of the fat in the aqueous phase, it is necessary to homogenise the emulsion so that the fat is in the form of droplets of 0.1-5.0 µm diameter, preferably of 0.5-2.0 µm diameter.

Optionally an emulsifier may be used to help in maintaining the dispersion of the fat. The concentration to be used would be well known to the skilled person.

The fructo-oligosaccharide used in the spread must have an average degree of polymerization of 20-30. This is required to provide the necessary degree of structure in the spread and to avoid the appearance of sweet or other unwanted tastes.

Preferably the amount of fructo-oligosaccharide is less than 15% by weight, more preferably less than 9 or 10% by weight, and most preferably less than 7% by weight. The fructo-oligosaccharide is suitably an inulin derived from chicory or any other suitable plant material. Suitable inulins are those marketed under the trade names Raftiline HP, Frutafit XLC, Frutafit EXL and Fibruline LC.

The low-methoxy pectin usable in the spread is of the type normally available in the market under that designation. Preferably the amount of low-methoxy pectin is 0.6 to 1.0% by weight. The calcium ions required to gel the low-methoxy pectin may be provided by any suitable food grade calcium source, for example a salt, such as calcium chloride or calcium lactate, or a milk product. If a calcium salt is used, preferably it is calcium lactate. Preferably the amount of calcium ions used is that amount that is sufficient to supply 75-100% of the stoichiometric equivalent of the amount of low-methoxy pectin that is used. The amount of calcium required for stoichiometric equivalence can easily be worked out by the skilled person.

As an alternative to the use of a low-methoxy pectin, a dried cationic salt of a high-methoxy pectin may be used, such as the product marketed under the trade name Slendid. This type of pectin salt, when suspended in distilled water, will swell to give heat-stable particles of a mean equivalent diameter greater than 100 µm. Preferably the amount of dried cationic pectin salt is 1.75-3.25% by weight.

The starch usable in the spread may be a natural starch or a modified starch. The starch may come from any suitable source, for example wheat, rice, potatoes, tapioca, corn or waxy maize. Examples of suitable modified starches include acetylated distarch adipate, acetylated distarch phosphate, and hydroxypropyl distarch phosphate. Maltodextrins other than gelling maltodextrins are not suitable for use in the spreads of the invention, and are therefore excluded from the definition of starch. Preferably the amount of starch used is 1.5 to 7.5% by weight, more preferably 1.5-5.0% by weight.

The milk protein usable in the spread may be any form of milk protein, but preferably buttermilk powder or skimmed milk powder are used as sources of milk protein. Other suitable sources of milk protein that may be used include buttermilk concentrate, skimmed milk concentrate, whole milk powder, whole milk concentrate, whey protein concentrate, whey protein isolate, sodium caseinate, or a mixture of caseinate and whey protein in substantially the same proportions as they occur in milk. The term concentrate in the above is intended to encompass any known method of concentration including ultra-filtration, reverse osmosis, evaporation, and acidification followed by separation. The amount of milk protein used will vary depending on whether or not starch or gelling maltodextrin are present. If there is no starch or maltodextrin present in the aqueous phase, the amount of milk protein used is preferably 3.5 to 6.5% by weight. If starch or gelling maltodextrin are present in the aqueous phase, the total amount of milk protein plus starch or of milk protein plus gelling maltodextrin is preferably 2.5 to 15% by weight.

The gelling maltodextrin usable in the spread may be any maltodextrin that gels, but it is preferably one that is able to be used as a fat substitute. A gelling maltodextrin is defined as one with a Dextrose Equivalent (DE) of < 10. Preferably the amount of gelling maltodextrin used is 10 to 12% by weight.

A function of the xanthan gum usable in the spread is to increase the viscosity of the aqueous phase to help stabilise the dispersion before the gelation of the main structuring agents (fructo-oligosaccharide, low-methoxy pectin, starch, milk protein, gelling maltodextrin). This function is well known in the manufacture of spreads and other products. Preferably the amount of xanthan gum used is 0.1-0.15% by weight.

Other components normally found in very low fat spreads may also be present, such as preservatives, for example sorbic acid or its salts, salt (sodium chloride), colourings, flavourings and vitamins. These are used at the concentrations typically used in such products, which are well known to the skilled person.

The invention will now be described in further detail, by way of example only, with reference to the accompanying drawings and following Examples.

### Preparation of the Spread

The process used to prepare the spreads of the invention involves preparing separate aqueous and fat phases, mixing the aqueous and fat phases to form an oil-in-water emulsion, homogenizing the emulsion, pasteurizing the emulsion and partially cooling it, packing it, and storing it at low temperature to allow the structure to develop.

To prepare the aqueous phase, all the water-soluble dry ingredients in the formulation, except the calcium source and milk protein, (e.g. fructo-oligosaccharide, low-methoxy pectin, starch, gelling maltodextrin, xanthan gum, preservative, salt, flavouring, water-soluble colouring) are reconstituted in water at a temperature of 55-85°C with agitation. When the water-soluble ingredients have fully dissolved, the temperature is reduced to 55-60°C and the pH of the aqueous phase is adjusted to 5.4 using 40% v/v lactic acid, with continuous mixing. The calcium source and/or milk protein, if present, are reconstituted in water separately from the other water-soluble ingredients and are combined with the remainder of the aqueous phase immediately before the addition of the fat phase. Alternatively they may be added as dry ingredients with agitation to the remainder of the aqueous phase, and the fat phase added immediately they have fully dissolved.

The fat phase is prepared by mixing and heating the fats or oils together with the fat-soluble ingredients (e.g. fat-soluble colouring, emulsifier, vitamins, flavouring) to a temperature of 55-60°C . The fat phase is then added to the water phase with continuous agitation until they have fully mixed to form an coarse oil-in-water emulsion.

The emulsion is then pumped through a homogenizer at a pressure of 21-70 MPa, preferably at a pressure of 21-35 MPa, before being transferred to either a plate pack heat exchanger or a swept surface heat exchanger, where it is heated to a temperature of 95-120°C , before being cooled to 5-75°C.

The spread is then cold-filled or hot-filled into suitable packages, e.g. tubs, which are sealed and stored at 2-5°C to allow the structure to develop fully . Softer versions of the spread have a texture that is squeezable or pumpable, and may therefore be packed in such packages as squeezable bottles, collapsible or squeezable tubes, and pump-action bottles.

### Examples

All of the following Examples were made by the process outlined above. For each example the ingredients of the spread are given, together with the value(s) of C and a reference to the Figure containing the curves of stress vs. deformation and of dσ/dD for that example. Several comparative examples from known compositions are also given.

### Example 1

| Fat Phase : | |
|---|---|
| Rapeseed oil | 99.57% |
| Flavouring | 0.33% |
| Colouring | 0.10% |

| Spread : | |
|---|---|
| Inulin (Raftiline HP) | 12.0% |
| Low-methoxy Pectin | 1.0% |
| Calcium ions | 100% of stoichiometric equivalent |
| Buttermilk Powder | 12.0% |
| Fat Phase | 2.5% |
| Water | to 100% |
| C ₂₄ₕ : 0.37 kPa/mm - see Figure 1 | |

### Example 2

| Fat Phase : as for Example 1 | |
|---|---|
| Spread: | |
| Inulin (Raftiline HP) | 15.0% |
| Low-methoxy Pectin | 0.4% |
| Calcium ions | 100% of stoichiometric equivalent |
| Maltodextrin (C*01906) | 10.0% |
| Sodium Chloride | 1.0% |
| Fat Phase | 10.0% |
| Water | to 100% |
| C₂₄ₕ : 0.25 kPa/mm - see Figure 2 | |

### Example 3

| Fat Phase : as for Example 1 | |
|---|---|
| Spread : | |
| Inulin (Raftiline HP) | 3.0% |
| Low-methoxy Pectin | 1.0% |
| Calcium ions | 100% of stoichiometric equivalent |
| Buttermilk Powder | 18.0% |
| Fat Phase | 7.5% |
| Water | to 100% |
| C₂₄ₕ : 0.06 kPa/mm | |
| C₄₈ₕ : 0.01 kPa/mm | |
| C_{7d} : 0.16 kPa/mm - see Figure 4 | |

### Example 4

| Fat Phase : as for Example 1 | |
|---|---|
| Spread : | |
| Inulin (Raftiline HP) | 1.0% |
| Low-methoxy Pectin | 1.0% |
| Calcium ions | 100% of stoichiometric equivalent |
| Buttermilk Powder | 18.0% |
| Fat Phase | 10.0% |
| Water | to 100% |
| C₂₄ₕ : 0.0 kPa/mm - see Figure 5 | |

### Example 5

| Fat Phase : as for Example 1 | |
|---|---|
| Spread : | |
| Inulin (Raftiline HP) | 9.0% |
| Low-methoxy Pectin | 1.2% |
| Calcium ions | 100% of stoichiometric equivalent |
| Starch (Remyrise AC) | 7.0% |
| Sodium Chloride | 1.0% |
| Fat Phase | 10.0% |
| Water | to 100% |
| C₄₈ₕ : 0.6 kPa/mm - see Figure 6 | |

### Example 6

| Fat Phase : as for Example 1 | |
|---|---|
| Spread : | |
| Inulin (Raftiline HP) | 9.0% |
| Low-methoxy Pectin | 1.0% |
| Calcium ions | 100% of stoichiometric equivalent |
| Skimmed Milk Powder | 5.0% |
| Starch (Remyrise AC) | 4.0% |
| Sodium Chloride | 1.0% |
| Fat Phase | 5.0% |
| Water | to 100% |
| C₇₂ₕ : 0.87 kPa/mm - see Figure 7 | |

### Example 7

| Fat Phase : as for Example 1 | |
|---|---|
| Spread : | |
| Inulin (Raftiline HP) | 15.0% |
| Starch (Instant Clear Gel) | 3.0% |
| Maltodextrin | 10.0% |
| Sodium Chloride | 1.0% |
| Fat Phase | 5.0% |
| Water | to 100% |
| C₄₈ₕ : 5.02 kPa/mm - see Figure 8 | |

### Example 8

| Fat Phase : as for Example 1 | |
|---|---|
| Spread : | |
| Inulin (Raftiline HP) | 9.0% |
| Low-methoxy Pectin | 0.8% |
| Calcium ions | 100% of stoichiometric equivalent |
| Starch (Novalose) | 2.5% |
| Xanthan Gum | 0.1% |
| Fat Phase | 5.0% |
| Water | to 100% |
| C₂₄ₕ : 0.1 kPa/mm - see Figure 9 | |

### Example 9

| Fat Phase : as for Example 1 | |
|---|---|
| Spread : | |
| Inulin (Raftiline HP) | 4.0% |
| Buttermilk Powder | 7.1% |
| Maltodextrin (C*01906) | 12.0% |
| Sodium Chloride | 1.3% |
| Xanthan Gum | 0.15% |
| Fat Phase | 4.5% |
| Water | to 100% |
| C_{7d} : 0.0 kPa/mm - see Figure 10 | |

### Example 10

| Fat Phase : | |
|---|---|
| Palm Oil | 55.0% |
| Hydrogenated Rapeseed Oil | 40.0% |
| Hydrogenated Palm Oil | 5.0% |
| Colouring | 0.08% |

| Spread : | |
|---|---|
| Inulin (Raftiline HP) | 9.0% |
| Low-methoxy Pectin | 0.4% |
| Calcium ions | 75% of stoichiometric equivalent |
| Starch (Novalose) | 2.5% |
| Xanthan Gum | 0.1% |
| Fat Phase | 10.0% |
| Water | to 100% |
| C₇₂ₕ : 0.0 kPa/mm - see Figure 11 | |

### Example 11

| Fat Phase : as for Example 10 | |
|---|---|
| Spread : | |
| Inulin (Raftiline HP) | 9.0% |
| Low-methoxy Pectin | 0.8% |
| Calcium ions | 100% of stoichiometric equivalent |
| Starch (Remyrise AC) | 2.5% |
| Fat Phase | 5.0% |
| Water | to 100% |
| C_{7d} : 0.0 kPa/mm - see Figure 12 | |

### Example 12

| Fat Phase : as for Example 10 | |
|---|---|
| Spread : | |
| Inulin (Raftiline HP) | 9.0% |
| Low-methoxy Pectin | 1.0% |
| Calcium ions | 100% of stoichiometric equivalent |
| Skimmed Milk Powder | 18.0% |
| Fat Phase | 5.0% |
| Water | to 100% |
| C₇₂ₕ : 0.25 kPa/mm - see Figure 13 | |

### Example 13

| Fat Phase : as for Example 10 | |
|---|---|
| Spread : | |
| Inulin (Raftiline HP) | 9.0% |
| Low-methoxy Pectin | 1.0% |
| Calcium ions | 100% of stoichiometric equivalent |
| Buttermilk Powder | 15.0% |
| Fat Phase | 2.5% |
| Water | to 100% |
| C₂₄ₕ : 0.31 kPa/mm - see Figure 14 | |

### Example 14

| Fat Phase : as for Example 10 | |
|---|---|
| Spread : | |
| Inulin (Raftiline HP) | 9.0% |
| Low-methoxy Pectin | 0.8% |
| Calcium ions | 100% of stoichiometric equivalent |
| Starch (Remyrise AC) | 7.5% |
| Fat Phase | 10.0% |
| Water | to 100% |
| C₂₄ₕ : 0.37 kPa/mm - see Figure 15 | |

### Example 15

| Fat Phase : as for Example 10 | |
|---|---|
| Spread : | |
| Inulin (Raftiline HP) | 6.0% |
| Low-methoxy Pectin | 1.0% |
| Calcium ions | 100% of stoichiometric equivalent |
| Buttermilk Powder | 18.0% |
| Fat Phase | 5.0% |
| Water | to 100% |
| C₂₄ₕ : 0.06 kPa/mm - see Figure 16 | |

### Example 16

| Fat Phase : as for Example 10 | |
|---|---|
| Spread : | |
| Inulin (Raftiline HP) | 15.0% |
| Low-methoxy Pectin | 0.4% |
| Calcium ions | 100% of stoichiometric equivalent |
| Starch (Instant Clear Gel) | 1.5% |
| Maltodextrin (C*01906) | 10.0% |
| Fat Phase | 10.0% |
| Water | to 100% |
| C₂₄ₕ : 1.84 kPa/mm | |
| C₄₈ₕ : 1.75 kPa/mm - see Figure 17 | |

### Comparative Example A

This was made according to Example XVI of WO-A-9603888 and had the following composition :

| | |
|---|---|
| Oligofructose DP 27.5 | 20.0% |
| Gelatin | 1.5% |
| Sunflower Oil | 1.0% |
| Water, salt, sorbate, colour, flavour | to 100% |
| Lactic Acid | to pH 4.8 |
| C_{7d} : -21 kPa/mm - see Figure 2 | |

It is clear that this spread shows gel-like properties as it has a negative value for C, which is to be expected as it contains gelatin. The oligofructose used is one with a fairly high degree of polymerization, but a large amount is still required to provide structure in the spread.

### Comparative Example B

This was a 45% solution of Raftiline HP, which we believe to be the product of WO-A- 9601849. This showed strong gel-like properties, with a large negative value for C.
C₄₈ₕ : -315 kPa/mm - see Figure 3

### Comparative Example C

This was made according to Example 2 of EP-A-0596546 and had the following composition :

| | |
|---|---|
| Inulin (Raftiline LS) | 33.0% |
| Gelatin 250 bloom | 1.0% |
| Sodium Chloride | 1.5% |
| Water, sorbate, colour | to 100% |
| C_{7d} : -4 kPa/mm - see Figure 3 | |

This example shows some gel-like characteristics as it has a negative value for C, which is to be expected as it contains gelatin. The inulin used is not one with a high average degree of polymerization and consequently a large amount is needed to provide structure in the spread.

### Importance of Fructo-oligosaccharide of High Average Degree of Polymerization: Comparative Examples D to G

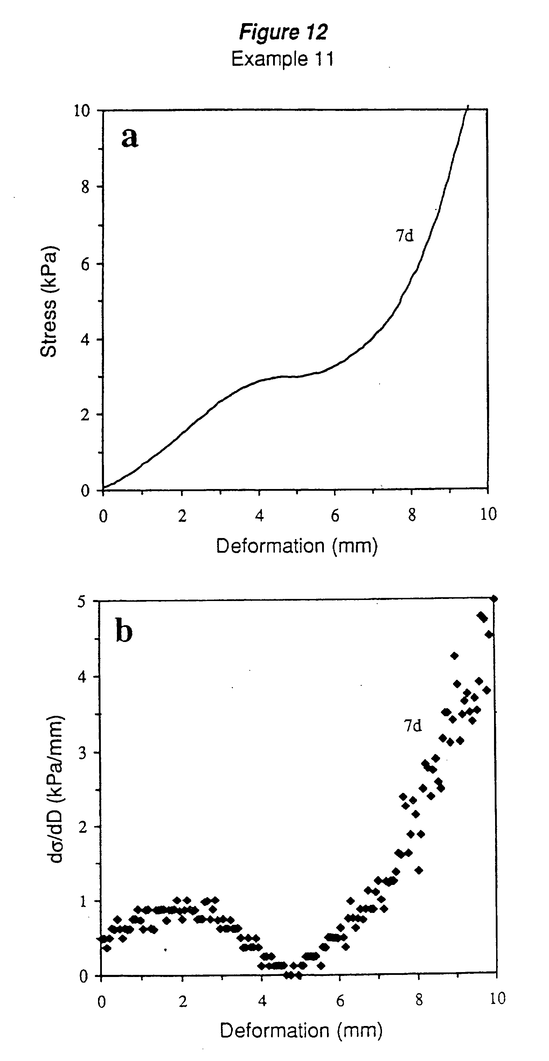

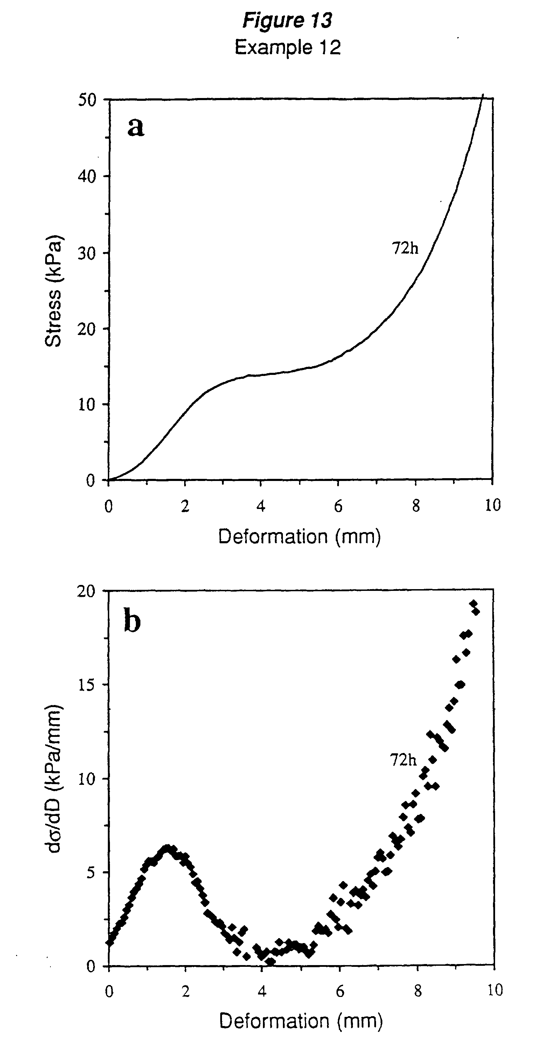

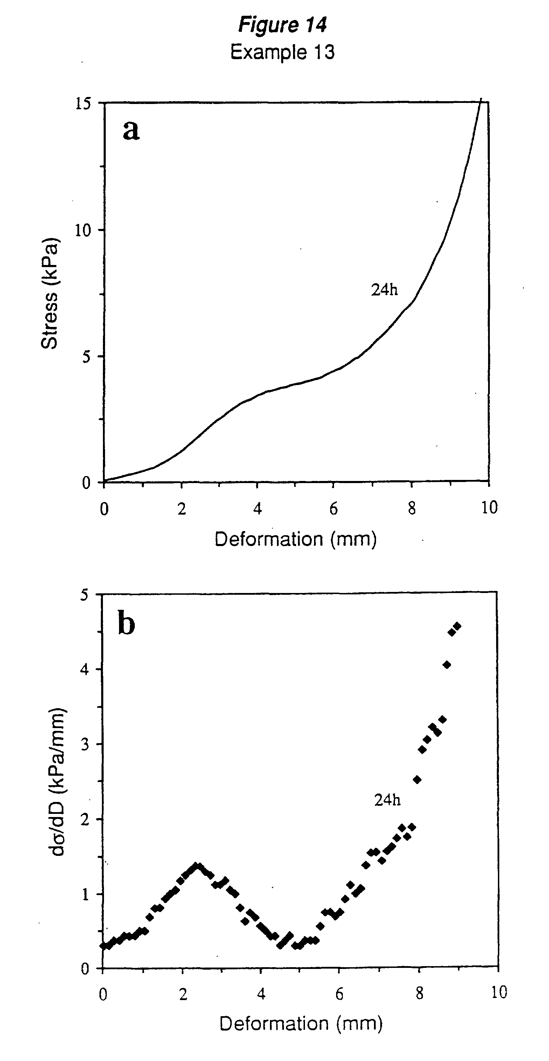

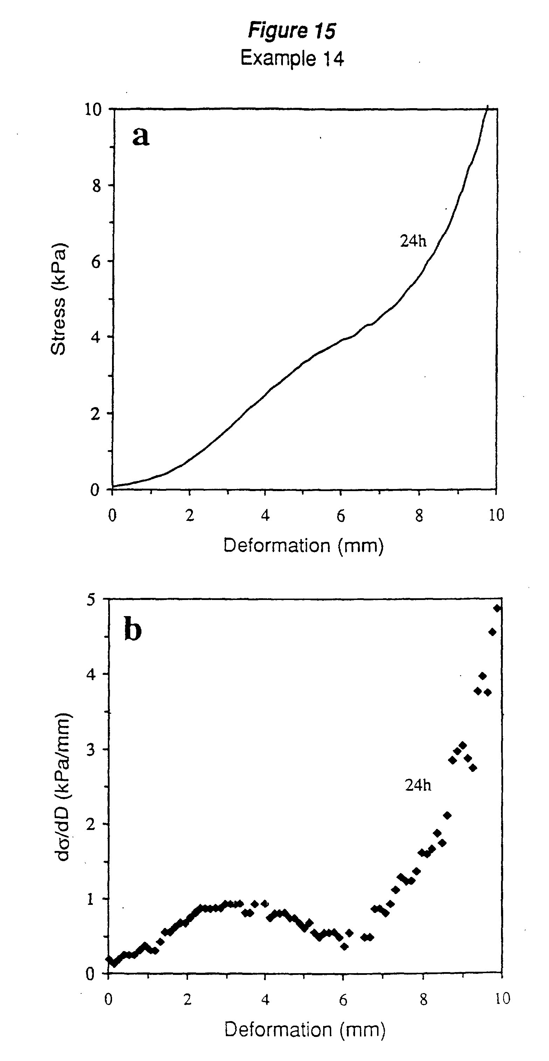

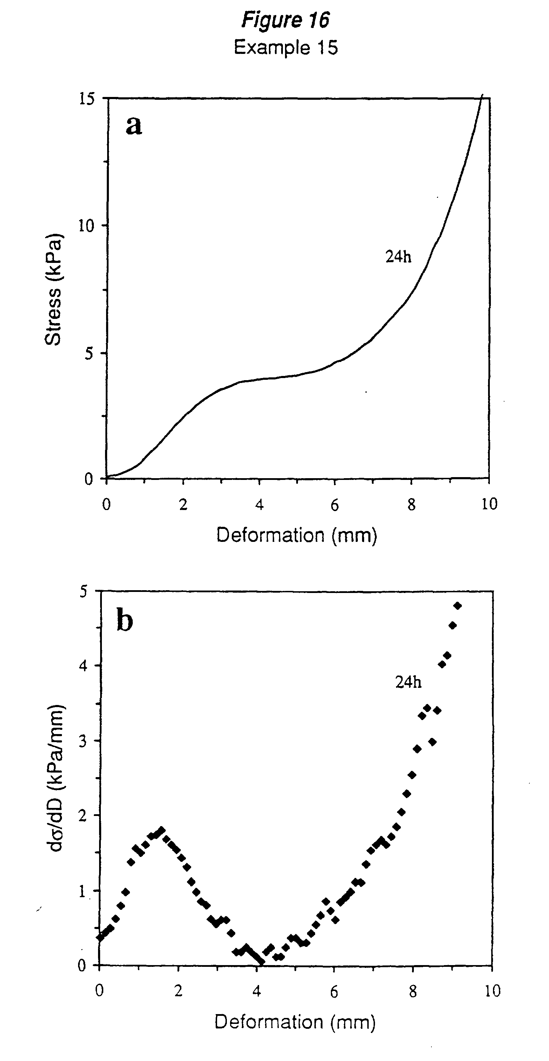

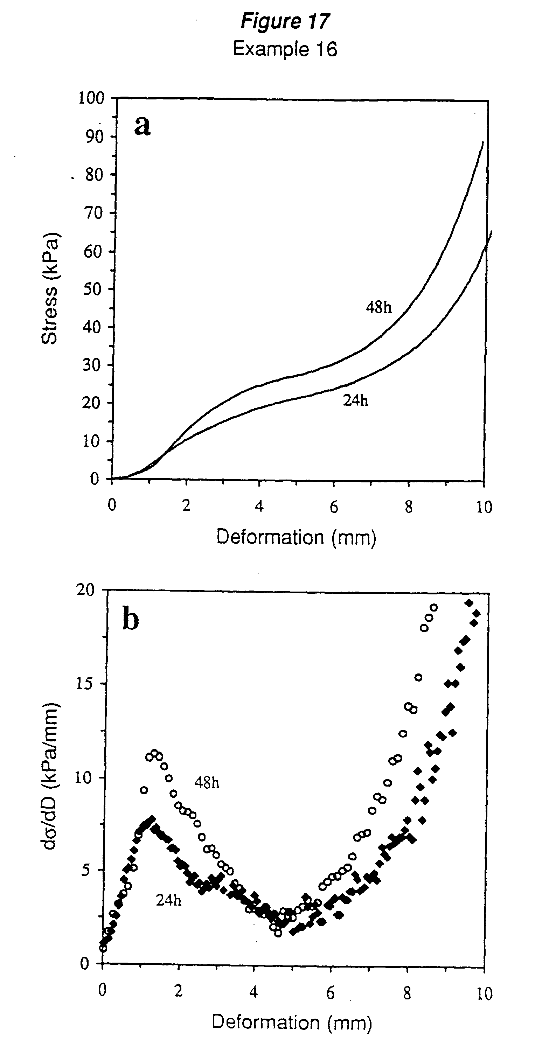

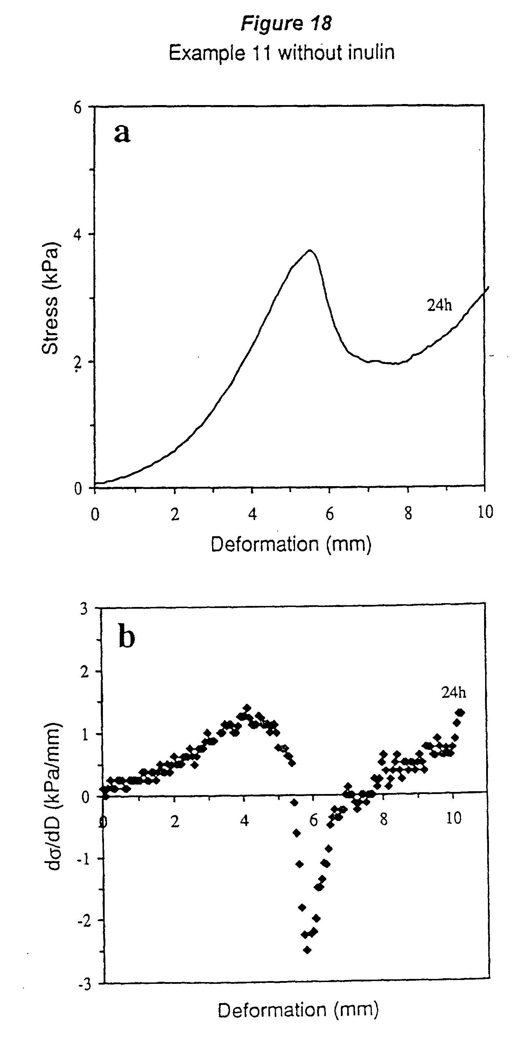

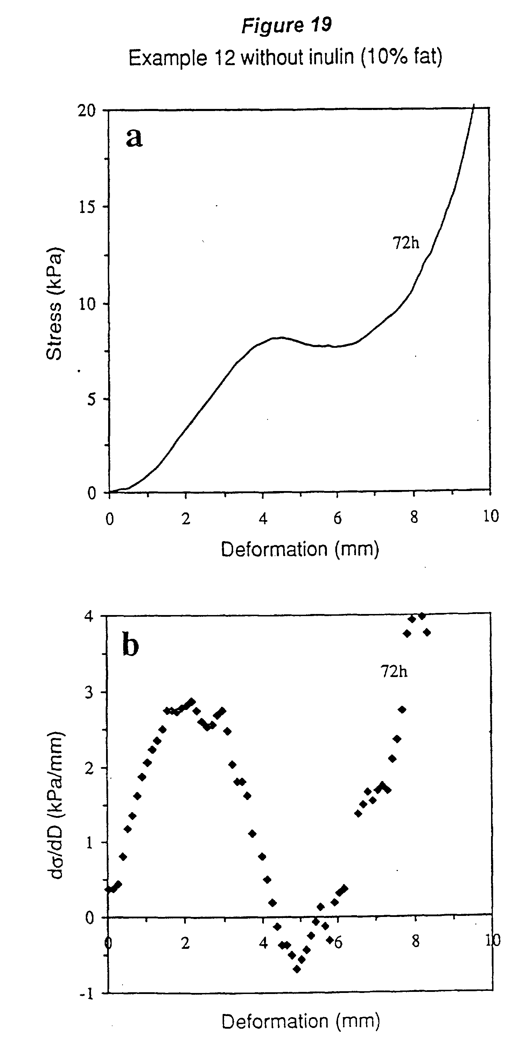

We believe that the fructo-oligosaccharide with high average degree of polymerization has an important role in producing the characteristic rheological properties of the spreads of the invention. Without wishing to be bound by any theory, we believe that it does this by "diluting" the strong elastic gels formed by the hydrocolloids present, so that a purely plastic texture is created in the spreads. This can be demonstrated by reference to Figures 12 and 18 and to Figures 13 and 19.

The 5% fat spread of Example 11 (Figure 12) contains 0.8% low-methoxy pectin, 2.5% starch, and 9.0% inulin, which together impart plastic properties to the final product, with C_{7d} = 0.0 kPa/mm. Figure 18 refers to a product made in Comparative Example D with the same composition as Example 11 except that there is no inulin present. The stress-deformation profile of Figure 18a resembles the gel-like fracture of a simple pectin gel with σᵢ/σₘ = 0.52, and shows that the starch by itself has little "diluting" effect on the strong elastic character of the pectin. Consequently, the first derivative plot in Figure 18b shows a negative C value, with C ₂₄ₕ = -2.61.

In Example 12 (Figure 13) the 2.5% starch of Example 11 is replaced by 18.0% skimmed milk powder, without affecting the rheological properties of the spread (C₇₂ₕ = 0.25 kPa/mm). However, in Comparative Example E, removal of the inulin again results in a gel-like structure, with σᵢ/σₘ = 0.94 (Figure 19a) and a negative C value : C₇₂ₕ = -0.68 (Figure 19b). The pectin dominates over the milk protein, creating a continuous elastic matrix, which can only be transformed into a purely plastic product when diluted by the inulin. The importance of the inulin is emphasized by the fact that the spread of Figure 19 contained 10.0% fat, rather than the 5.0% used in Example 12, yet the pectin still dominates the system.

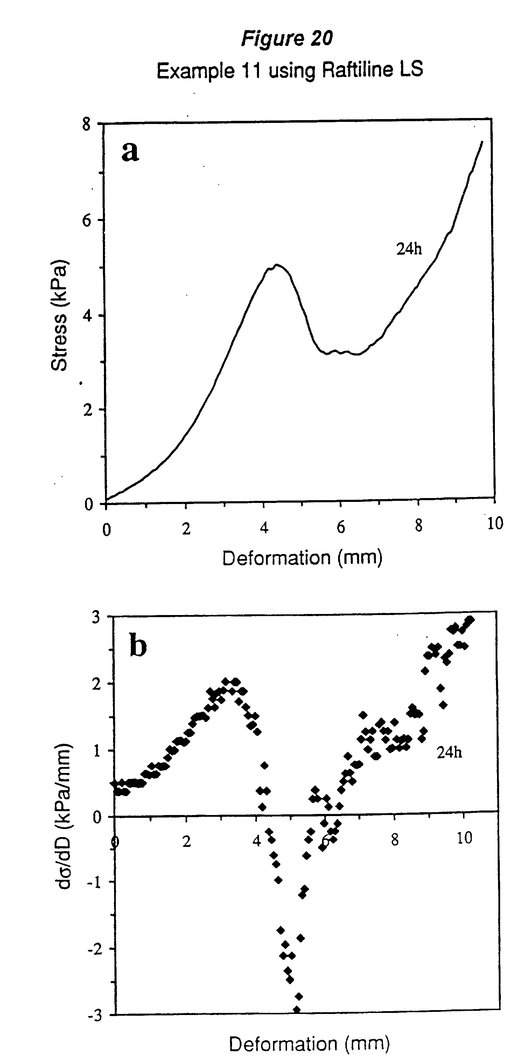

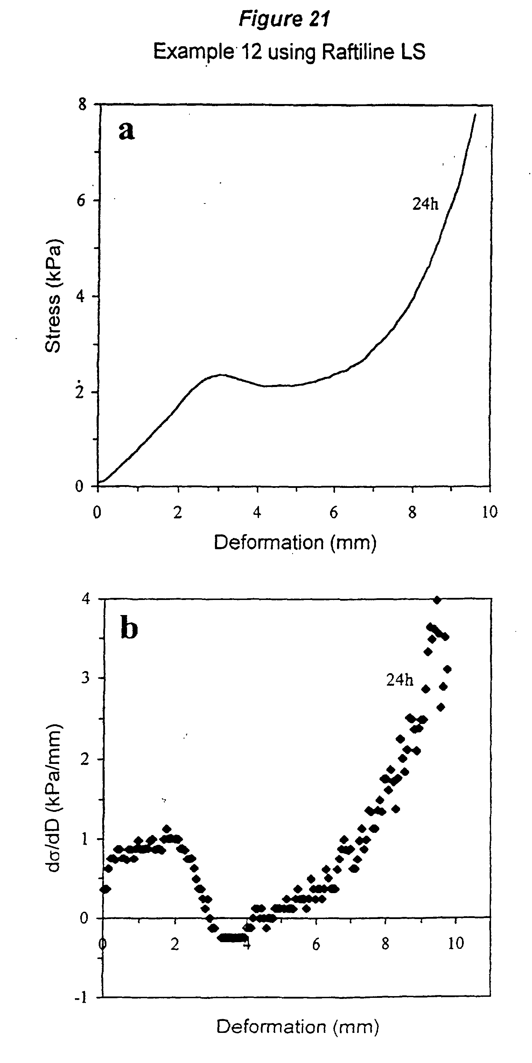

The importance of the high average degree of polymerization of the fructo-oligosaccharide can be shown by comparing Figures 12 and 13 with Figures 20 and 21. Figures 20 and 21 refer to variations of Examples 11 and 12 respectively (Comparative Examples F and G) in which the Raftiline HP inulin (average degree of polymerization 23) is replaced by the same amount of Raftiline LS inulin (average degree of polymerization about 11). It can be seen that this results in a gel-like stress-deformation profile in both examples, with the spread of Figure 20 having σᵢ/σₘ = 0.62 and a negative C value (C₂₄ = -2.94) and the spread of Figure 21 having σᵢ/σₘ = 0.89 and C₂₄ = -0.25. These values are much nearer to those of the spreads without inulin (Figures 18 and 19) than to those of the spreads with the inulin with a high average degree of polymerization (Figures 12 and 13). This emphasizes the effective formation of a pectin gel, which in these examples is not "diluted" by an inulin network. Possibly the Raftiline LS inulin molecules remain intimately mixed with the pectin chains, acting to raise the viscosity rather than forming a network alongside the pectin network. In contrast when Raftiline HP is used, as in Examples 11 and 12, we believe that the inulin does form a network alongside the pectin network, diluting its strong elastic properties.

## Claims

1. A water-continuous spread which is substantially gelatin-free and which comprises 88-100% by weight of a continuous aqueous phase and 0-12% by weight of a dispersed fat phase, the continuous aqueous phase comprising 1-20% by weight based on the spread of a fructo-oligosaccharide with an average degree of polymerization of 20-30, together with at least two other hydrocolloid components selected from pectins, starches, milk proteins, gelling maltodextrins and xanthan gum, wherein, when compression analysis is carried out on the spread at 5°C after storage at 5°C for at least 24 hours, using a cylindrical sample of 28 mm diameter and 14 mm height, which is compressed to 10% of its original height at a constant rate of 0.8 mm/sec, a plot of stress (σ) versus strain (ε) shows a single shoulder with no maximum stress, and a plot of the first derivative of the stress (σ) as a function of the sample deformation (D - measurable as the distance in mm travelled by the compression plate) against the sample deformation shows a minimum with a value (C) equal to or greater than zero.

2. A water-continuous spread according to claim 1, wherein the C value is 0-6.0 kPa/mm.

3. A water-continuous spread according to claim 2, wherein the C value is 0.0-1.0 kPa/mm.

4. A water-continuous spread according to claim 3, wherein the C value is 0.0-0.37 kPa/mm.

5. A water-continuous spread according to any one of the preceding claims, comprising 1-15% by weight of a fructo-oligosaccharide with an average degree of polymerization of 20-30.

6. A water-continuous spread according to claim 5, comprising 1-10% by weight of a fructo-oligosaccharide with an average degree of polymerization of 20-30.

7. A water-continuous spread according to claim 6, comprising 1-7% by weight of a fructo-oligosaccharide with an average degree of polymerization of 20-30.

8. A water-continuous spread according to any one of the preceding claims, wherein the fructo-oligosaccharide is an inulin.

9. A water-continuous spread according to any one of the preceding claims, wherein the two hydrocolloid components are selected from :
0.3-4.0% by weight based on the spread of a pectin,
1.0-8.0% by weight on the spread of a starch,
1.5-7.5% by weight based on the spread of a milk protein,
8.0-14.0% by weight based on the spread of a gelling maltodextrin, and
0.05-0.2% by weight based on the spread of xanthan gum.

10. A water-continuous spread according to claim 9, wherein the pectin comprises 0.3-1.3% by weight of a low-methoxy pectin together with 50-100% of the stoichiometric equivalent of calcium ions, or 1.0-4.0% by weight of a dried cationic pectin salt, which when suspended in distilled water will swell to give heat-stable particles of a mean equivalent diameter greater than 100µm.

11. A water-continuous spread according to claim 9, wherein the starch is derived from wheat, rice, potatoes, tapioca, corn or waxy maize.

12. A water-continuous spread according to claim 9, wherein the starch is a modified starch seleted from acetylated distarch adipate, acetylated distarch phosphate and hydroxypropyl distarch phosphate.

13. A water-continuous spread according to claim 9, wherein the milk protein comprises buttermilk powder, skimmed milk powder, buttermilk concentrate, skimmed milk concentrate, whole milk powder, whole milk concentrate, whey protein concentrate, whey protein isolate, sodium caseinate, or a mixture of caseinate and whey protein in substantially the same proportions as they occur in milk.

14. A water-continuous spread according to any one of the preceding claims, comprising 0-10.5% by weight of the dispersed fat phase.

15. A water-continuous spread according to claim 14, comprising 2.5-7.5% by weight of the dispersed fat phase.

16. A process for the preparation of a water-continuous spread according to any one of the preceding claims, wherein the aqueous phase and the fat phase are prepared as separate phases, which phases are mixed to form an oil-in-water emulsion, and the emulsion is homogenized, pasteurized, partially cooled, packed, and stored at low temperature.

## Patentansprüche

1. Wasserkontinuierlicher Aufstrich, der im Wesentlichen Gelatine-frei ist und 88 - 100 Gew.-% einer kontinuierlichen wässrigen Phase und 0 - 12 Gew.-% einer dispergierten Fettphase umfasst, wobei die kontinuierliche wässrige Phase 1 - 20 Gew.-%, bezogen auf den Aufstrich, eines Fructo-Oligosaccharids mit einem durchschnittlichen Polymerisationsgrad von 20 - 30 zusammen mit mindestens zwei anderen Hydrokolloid-Komponenten umfasst, welche aus Pektinen, Stärken, Milchproteinen, gelierenden Maltodextrinen und Xanthangummi ausgewählt sind, wobei, wenn bei 5 °C nach mindestens 24stündiger Lagerung bei 5 °C unter Verwendung einer zylindrischen Probe mit einem Durchmesser von 28 mm und einer Höhe von 14 mm, die bei einer konstanten Geschwindigkeit von 0,8 mm/s auf 10 % ihrer ursprünglichen Höhe komprimiert wird, eine Kompressionsanalyse an dem Aufstrich durchgeführt wird, eine Auftragung der Spannung (σ) gegen die Dehnung (ε) eine einzige Schulter ohne Spannungsmaximum zeigt und eine Auftragung der ersten Ableitung der Spannung (σ) als Funktion der Probenverformung (D - messbar als die Entfernung in mm, die von der Kompressionsplatte zurückgelegt wurde) gegen die Probenverformung ein Minimum mit einem Wert (C) zeigt, der gleich oder größer als Null ist.

2. Wasserkontinuierlicher Aufstrich nach Anspruch 1, bei dem der Wert C 0 - 6,0 kPa/mm beträgt.

3. Wasserkontinuierlicher Aufstrich nach Anspruch 2, bei dem der Wert C 0,0 - 1,0 kPa/mm beträgt.

4. Wasserkontinuierlicher Aufstrich nach Anspruch 3, bei dem der Wert C 0,0 - 0,37 kPa/mm beträgt.

5. Wasserkontinuierlicher Aufstrich nach einem der vorangehenden Ansprüche, der 1 - 15 Gew.-% eines Fructo-Oligosaccharids mit einem durchschnittlichen Polymerisationsgrad von 20 - 30 umfasst.

6. Wasserkontinuierlicher Aufstrich nach Anspruch 5, der 1 - 10 Gew.-% eines Fructo-Oligosaccharids mit einem durchschnittlichen Polymerisationsgrad von 20 - 30 umfasst.

7. Wasserkontinuierlicher Aufstrich nach Anspruch 6, der 1 - 7 Gew.-% eines Fructo-Oligosaccharids mit einem durchschnittlichen Polymerisationsgrad von 20 - 30 umfasst.

8. Wasserkontinuierlicher Aufstrich nach einem der vorangehenden Ansprüche, in dem das Fructo-Oligosaccharid ein Inulin ist.

9. Wasserkontinuierlicher Aufstrich nach einem der vorangehenden Ansprüche, in dem die zwei Hydrokolloid-Komponenten ausgewählt sind aus:
0,3 - 4,0 Gew.-%, bezogen auf den Aufstrich, eines Pektins,
1,0 - 8,0 Gew.-%, bezogen auf den Aufstrich, einer Stärke,
1,5 - 7,5 Gew.-%, bezogen auf den Aufstrich, eines Milchproteins,
8,0 - 14,0 Gew.-%, bezogen auf den Aufstrich, eines gelierenden Maltodextrins und
0,05 - 0,2 Gew.-%, bezogen auf den Aufstrich, Xanthangummi.

10. Wasserkontinuierlicher Aufstrich nach Anspruch 9, in dem das Pektin 0,3 bis 1,3 Gew.-% eines Pektins mit wenig Methoxy (low-methoxy pectin) zusammen mit 50 - 100 % des stöchiometrischen Äquivalents an Calciumionen oder 1,0 - 4,0 Gew.-% eines getrockneten kationischen Pektin-Salzes umfasst, welches, wenn es in destilliertem Wasser suspendiert wird, quillt, um wärmebeständige Teilchen mit einem mittleren Äquivalent-Durchmesser von mehr als 100 µm zu ergeben.

11. Wasserkontinuierlicher Aufstrich nach Anspruch 9, in dem die Stärke von Weizen, Reis, Kartoffeln, Tapioka, Mais oder Wachsmais abstammt.

12. Wasserkontinuierlicher Aufstrich nach Anspruch 9, in dem die Stärke eine modifizierte Stärke ist, die aus acetyliertem Distärkeadipat, acetyliertem Distärkephosphat und Hydroxypropyldistärkephosphat ausgewählt ist.

13. Wasserkontinuierlicher Aufstrich nach Anspruch 9, in dem das Milchprotein Buttermilchpulver, Magermilchpulver, Buttermilch-Konzentrat, Magermilch-Konzentrat, Vollmilchpulver, Vollmilch-Konzentrat, Molkenprotein-Konzentrat, Molkenprotein-lsolat, Natriumcaseinat oder eine Mischung von Caseinat und Molkenprotein in im Wesentlichen den gleichen Verhältnissen, wie sie in Milch auftreten, umfasst.

14. Wasserkontinuierlicher Aufstrich nach einem der vorangehenden Ansprüche, umfassend 0-10,5 Gew.-% der dispergierten Fettphase.

15. Wasserlöslicher Aufstrich nach Anspruch 14, umfassend 2,5 - 7,5 Gew.-% der dispergierten Fettphase.

16. Verfahren zur Herstellung eines wasserkontinuierlichen Aufstrichs nach einem der vorangehenden Ansprüche, in dem die wässrige Phase und die Fettphase als getrennte Phasen hergestellt werden, wobei die Phasen unter Bildung einer Öl-in-Wasser-Emulsion gemischt werden und die Emulsion homogenisiert, pasteurisiert, partiell abgekühlt, verpackt und bei niedriger Temperatur gelagert wird.

## Revendications

1. Produit à tartiner à phase aqueuse continue sensiblement sans gélatine et qui comprend de 88 à 100 % en poids d'une phase aqueuse continue et de 0 à 12 % en poids d'une phase grasse dispersée, la phase aqueuse continue comprenant de 1 à 20 % en poids en se basant sur le produit à tartiner d'un fructo-oligosaccharide avec un degré moyen de polymérisation allant de 20 à 30, conjointement avec au moins deux autres composants hydrocolloïdes sélectionnés parmi les pectines, les amidons, les protéines de lait, les maltodextrines gélifiantes et la gomme de xanthane, dans lequel, lorsqu'une analyse par compression est réalisée sur le produit à tartiner à 5°C après stockage à 5°C pendant au moins 24 heures, en utilisant un échantillon cylindrique de 28 mm de diamètre et de 14 mm de hauteur, qui est comprimé à 10 % de sa hauteur originale à une vitesse constante de 0,8 mm par seconde, un tracé du rapport de la contrainte ( ) à la déformation ( ) montre un épaulement unique sans contrainte maximale, et un tracé du rapport de la première dérivée de la contrainte ( ) fonction du rapport de la déformation de l'échantillon (D - mesurable en tant que distance en mm parcourue par la plaque de compression) à la déformation de l'échantillon montre un minimum d'une valeur (C) égale ou supérieure à zéro.

2. Produit à tartiner à phase aqueuse continue selon la revendication 1, dans lequel la valeur C est comprise entre 0 et 6,0 kPa/mm.

3. Produit à tartiner à phase aqueuse continue selon la revendication 2, dans lequel la valeur C est comprise entre 0,0 et 1,0 kPa/mm.

4. Produit à tartiner à phase aqueuse continue selon la revendication 3, dans lequel la valeur C est comprise entre 0,0 et 0,37 kPa/mm.

5. Produit à tartiner à phase aqueuse continue selon l'une quelconque des revendications précédentes, comprenant de 1 à 15 % en poids d'un fructo-oligosaccharide avec un degré moyen de polymérisation de 20 à 30.

6. Produit à tartiner à phase aqueuse continue selon la revendication 5, comprenant de 1 à 10 % en poids d'un fructo-oligosaccharide avec un degré moyen de polymérisation de 20 à 30.

7. Produit à tartiner à phase aqueuse continue selon la revendication 6, comprenant de 1 à 7 % en poids d'un fructo-oligosaccharide avec un degré moyen de polymérisation de 20 à 30.

8. Produit à tartiner à phase aqueuse continue selon l'une quelconque des revendications précédentes, dans lequel le fructo-oligosaccharide est une inuline.

9. Produit à tartiner à phase aqueuse continue selon l'une quelconque des revendications précédentes, dans lequel les composants hydrocolloides sont sélectionnés parmi :
de 0,3 à 4,0 % en poids d'une pectine en se basant sur le produit à tartiner ;
de 1,0 à 8,0 % en poids d'un amidon en se basant sur le poids du produit à tartiner ;
de 1,5 à 7,5 % en poids d'une protéine de lait en se basant sur le poids du produit à tartiner ;
de 8,0 à 14,0 % en poids d'une maltodextrine gélifiante en se basant sur le poids du produit à tartiner ;
de 0,05 à 0,2 % en poids d'une gomme de xanthane en se basant sur le poids du produit à tartiner.

10. Produit à tartiner à phase aqueuse continue selon la revendication 9, dans lequel la pectine comprend de 0,3 à 1,3 % en poids d'une pectine à faible teneur en groupes méthoxy conjointement avec de 50 à 100% de l'équivalent stoechiométrique d'ions calcium, ou de 1,0 à 4,0 % en poids d'un sel de pectine cationique séché, qui, lorsqu'il est mis en suspension dans de l'eau distillée, va gonfler pour donner des particules thermostables d'un diamètre équivalent moyen supérieur à 100 µm.

11. Produit à tartiner à phase aqueuse continue selon la revendication 9, dans lequel l'amidon est dérivé du blé, du riz, des pommes de terre, du tapioca, du maïs ou du maïs cireux.

12. Produit à tartiner à phase aqueuse continue selon la revendication 9, dans lequel l'amidon est un amidon modifié sélectionné parmi l'adipate de diamidon acétylé, le phosphate de diamidon acétylé et le phosphate de diamidon hydroxypropyle.

13. Produit à tartiner à phase aqueuse continue selon la revendication 9, dans lequel la protéine de lait comprend de la poudre de babeurre, de la poudre de lait écrémé, du concentré de babeurre, du concentré de lait écrémé, de la poudre de lait entier, du concentré de lait entier, du concentré de protéine lactosérique, de l'isolat de protéine lactosérique, du caséinate de sodium, ou un mélange de caséinate et de protéine lactosérique dans des proportions sensiblement identiques à celles que l'on rencontre dans le lait.

14. Produit à tartiner à phase aqueuse continue selon l'une quelconque des revendications précédentes, comprenant de 0 à 10,5 % en poids de la phase grasse dispersée.

15. Produit à tartiner à phase aqueuse continue selon la revendication 14, comprenant de 2,5 à 7,5% en poids de la phase grasse dispersée.

16. Procédé de préparation d'un produit à tartiner à phase continue selon l'une quelconque des revendications précédentes, dans lequel la phase aqueuse et la phase grasse sont préparées en tant que phases séparées, lesquelles phases sont mélangées pour former une émulsion huile dans eau, et l'émulsion est homogénéisée, pasteurisée, partiellement refroidie, conditionnée puis stockée à basse température.
